# EUROPEAN PATENT APPLICATION

(11) **EP 1 150 528 A1**
(43) Date of publication of application: **31.10.2001**
(21) Application number: 00309812.6
(22) Date of filing: 06.11.2000
(51) Int. Cl.: H04Q 7/38

(54) **Method and apparatus for updating options on a mobile unit based upon the location of the mobile unit**

(30) Priority: 26.04.2000 US 559233
(71) Applicant: LUCENT TECHNOLOGIES INC., Murray Hill, New Jersey 07974-0636 (US)
(72) Inventor: Akhteruzzaman, Akhtar, Naperville, Illinois 60565 (US); Sand, Paul R., Woodridge, Illinois 60517 (US); Sparber, Richard Grant, Wheaton, Illinois 60187 (US)
(74) Representative: Watts, Christopher Malcolm Kelway, Dr.

(57) **Abstract**

The present invention provides a method and apparatus for updating options on a wireless device (201). An update signal is transmitted within an update zone (207), which corresponds to a geographic area. Upon receiving the update signal, a wireless device (201) updates options in the wireless device. This updating can be to change the ring control from ringing to vibrating, to increase the volume of the ringing, or to disable either the wireless device or the transmitted on the wireless device. Upon leaving the update area (207), the option is returned to the value that it had prior to entering the update zone (207).

## Description

### Field of the Invention

The present invention relates generally to mobile communication units, and more particularly to a method and apparatus for updating options on a mobile unit based upon the location of the mobile unit.

### Background of the Invention

Wireless devices, such as cellular phones, pagers, and the like, typically are able to alert a user of the wireless device that an incoming call is present. This alert can be in the form of audible ringing, vibration of the device, an visible indication, or the like.

There are instances in which an audible alert of an incoming call is not desirable. For example, if the wireless device is on the person of one who is sitting in a movie theatre or opera house, it would not be desirable for the wireless device to emit an audible alert, which would disturb those around the user, in addition to the performers in the performance.

There are also instances in which a wireless device should not be allowed to operate. For example, signals sent from the wireless device can cause interruption or malfunction of other electronic equipment. On example of this is on airplanes, when airlines request all passengers to turn off their cellular phones, computers, and pagers. Another example is in hospitals, where hospitals do not want signals sent from wireless devices to interfere with health providing or health monitoring equipment. A further example of such limitation in operation is in blasting areas, which include firing devices that respond to RF signals. In such areas, any stray RF signals could cause an unintended detonation of the explosive material.

In each of these situations, the area in which the alteration of the ring tone or disabling of the wireless device is tied to a specific geographic location. This location can be a moving one, such as an airplane, or it could be a static one, such as a building or the like. In each of the scenarios, it is desired to modify the characteristics of wireless devices that are within a certain range of this location.

Therefore, a need exists for a method and apparatus for updating the options on a wireless device based upon the location of the wireless device.

### Summary of the Invention

It is an object of the present invention to provide a method and apparatus for updating the options on a wireless device based upon the location of the wireless device.

The present invention provides a method for changing an option on a wireless device based upon the geographic location of the wireless device. An update zone is defined. The update zone comprises a geographic location. This location can be any location in which it is desired to change the ringing characteristics of a wireless device located within the update zone. Examples of such locations include, but are not limited to, hospitals, theaters, airports, airplanes, and secure facilities:

In accordance with the preferred embodiment of the present invention, an update signal is transmitted within the update zone. The update signal is preferably transmitted by a cellular Global Positioning System (GPS), but can alternately be transmitted by a local RF transmitter.

Upon receiving the update signal, a wireless device changes an option on the wireless device based upon the update signal. For example, the option can be changed from a ringing mode to a vibrate mode. A wireless device that receives the update signal would change its ring control from ring to vibrate. An incoming communication to this wireless device would indicate the incoming communication by vibrating the wireless device rather than be ringing. In the preferred embodiment of the present invention, the original option is saved at the wireless device. Upon ceasing to receive the update signal, such as when the wireless device leaves the update zone, the wireless device changes the option back to the original option.

In an alternate embodiment of the present invention, the option on the wireless device is changed from ring mode to a louder ring mode. In this manner, any ringing of the wireless device will be loud. A signal can be sent within the update zone that requests the wireless device to ring. In this manner, any wireless device that is located within the update zone will ring loudly, thereby alerting others to its presence within the update zone. This can be desired in secure locations, or any location in which wireless devices are not desired.

A further alternate embodiment of the present invention comprises disabling the wireless device while within the update zone. This disablement can occur by either disabling the wireless capacity of the wireless device, or by disabling the transmitter of the wireless device. This embodiment can be especially desirable in locations in which signals transmitted by a wireless device can interfere with the operation of other devices located within the update zone. For example, in hospitals, where medical equipment can be adversely affected by RF signals generated by a wireless device, on an airplane, where RF transmissions can adversely affect the pilot's ability to communicate with the control tower, or in blasting areas, where the blasting caps are controlled by RF signals and can be inadvertently detonated by stray RF signals, such as those generated by a wireless device.

Thus, the present invention provides an improved method and apparatus for updating options on a wireless device.

### Brief Description of the Drawings

FIG. 1 depicts a communication system for updating options on a mobile unit in accordance with the preferred embodiment of the present invention.

FIG. 2 depicts a communication system for updating options on a mobile unit in accordance with an alternate embodiment of the present invention.

FIG. 3 depicts a mobile unit capable of having its options updated in accordance with the preferred embodiment of the present invention.

FIG. 4 depicts a flowchart for a preferred method of changing an option on a wireless device based upon the geographic location of the wireless device in accordance with a preferred embodiment of the present invention.

FIG. 5 depicts a flowchart for a method for updating options on w wireless device based upon the location of the wireless device in accordance with a preferred embodiment of the present invention.

FIG. 6 depicts a flowchart for a method for facilitating update zones at a location update server in accordance with a preferred embodiment of the present invention.

### Description of the Preferred Embodiment(s)

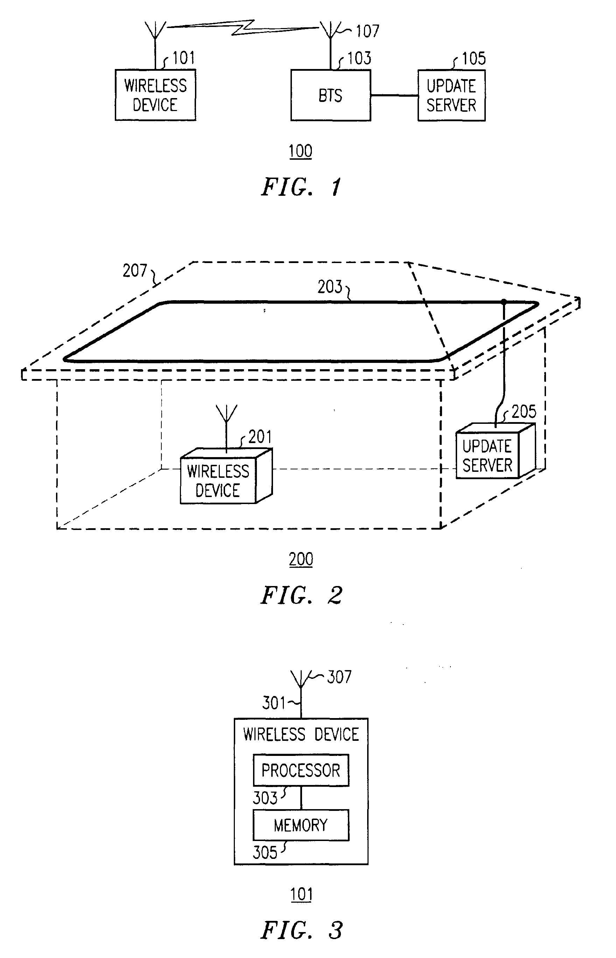

FIG. 1 depicts a communication system 100 for updating options on a wireless device 101 in accordance with the preferred embodiment of the present invention. Communication system 100 preferably includes wireless device 101, base transceiver station (BTS) 103, and update server 105. Communication system 100 is preferably a cellular Global Positioning System (GPS) that includes a plurality of base transceiver stations (BTSs), although only one BTS 103 is shown for clarity.

Cellular GPS systems are described in U.S. Patent Number 5,479,482, issued to Grimes, herein incorporated by reference. In this approach, a GPS receiver in a cellular terminal receives geo-coordinate information from multiple GPS satellites. The cellular terminal converts these geo-coordinates to present location information, which location information is then transmitted to a public safety answering point via a cellular switching system such as to provide public emergency call location information.

Wireless device 101 can be any wireless unit that is capable of receiving wireless signals. In the preferred embodiment of the present invention, wireless device 101 is a cellular telephone. In an alternate embodiment of the present invention, wireless device 101 can be a pager, a personal digital assistant (PDA), a wireless internet device, a two-way radio, or any other wireless device that is capable of receiving signals from BTS 103.

BTS 103 is coupled to update server 105 and includes a transceiver 107. Transceiver is effective in transmitting and receiving RF signals to and from a wireless device, such as wireless device 101. BTS 103 is preferably a Series 2 cell site, but can alternately be a micro/mod cell or the like.

Update server 105 is coupled to BTS 103 and preferably includes a processor and memory. The memory can be located within update server 105, or can be coupled to update server 105, for example in an external database or the like. Update server is preferably a "SUN NETRA 1120" sold by Sun Microsystems, Inc.

In the preferred embodiment, update server 105 stores update zone parameters that define a geographic location. Update server 105 preferably receives update zone parameters that define an update zone based upon an x-y coordinate system. Alternately, the update zone parameters can also comprise radius and center point parameters. The update zone parameters define the geographic boundaries of the update zone, such that a wireless device located within the update zone will receive the update signal.

Update server 105 stores the update zone parameters and the update signal in memory such that the two parameters are correlated. In this manner, the update signal is associated with the update zone. For example, the update zone may be defined as the area inside a theater, and the update signal for this update zone may indicate that the ring control on any wireless device located within this geographic update zone should be changed from ring mode to vibrate mode. In alternate embodiments of the present invention, the update zone could be a hospital, and the update signal could be a disabling of a wireless device located within the update zone, or the disabling of the transmitter of any wireless device located within the update zone.

FIG. 2 depicts a communication system 200 for updating options on a wireless device 201 in accordance with an alternate embodiment of the present invention. Communication system 200 is similar to communication system 100, but rather than being a cellular GPS system, communication system 200 includes a local RF signal transmitted within communication system 200.

Communication system 200 includes a transmitter 203 that preferably transmits an RF signal within the update zone. In the embodiment depicted in FIG. 2, the update zone is defined by transmitter 203.

Alternately, transmitter 203 can generate a continuos repeating message within update the update zone. This message could be a continuous message that would indicate to any wireless device located within the update zone a command. For example, transmitter 203 could send a continuous message for wireless device 201 that receives the message for wireless device 201 to switch ring control to a vibrate mode. In accordance with this embodiment, wireless device 201 would switch to the requested mode while receiving the update signal, but would switch back to the original mode when it stops receiving the update signal. This can be facilitated by storing the original value in memory at wireless device 201, and switching back to the value upon leaving the update zone.

FIG. 3 depicts wireless device 101 capable of having its options updated in accordance with the preferred embodiment of the present invention. Wireless device 101 preferably includes a receiver 301, a processor 303, memory 305, and a transmitter 307.

Receiver 301 is effective in receiving a location signal. The location signal is indicative of an update zone in which wireless device 101 is located. Receiver 301 is preferably effective in receiving a cellular Global Positioning System (GPS) signal. In an alternate embodiment, receiver 301 is effective in receiving a local Radio Frequency (RF) signal.

Processor 303 is effective in changing an option of wireless device 101 based upon the update zone in which wireless device 101 is located. Processor 303 is effective in changing the option back to the first value upon leaving the update zone.

Processor 303 is effective in changing the ring control of wireless device 101 in response to the update zone. In the preferred embodiment, the ring control is changed from an audible mode to a vibrate mode. In this manner, the wireless device will not ring if called but will merely vibrate, thereby decreasing the noise made by the wireless device and causing less disruption to those around the person using the wireless device.

The present invention can also change the ring control from a first audible mode to a second audible mode, wherein the second audible mode is louder than the first audible mode. In this scenario, the ringer on the wireless device is changed to a louder volume. This embodiment can be used to determine if a wireless device is present within the update zone. For example, cellular phones and the like are not allowed in hospitals because they can interfere with hospital equipment. Although signs are posted requesting people to not use their cellular phones, there is currently no way to enforce these rules. One way in which the present invention solves this problem is using this embodiment by increasing the ring volume on the wireless device. After increasing the ring volume, a signal is preferably sent to ring the wireless device. In this manner, any person having a wireless device in an area in which wireless devices are not allowed would have the wireless device ring loudly, which would easily allow the user and the device to be identified. This embodiment could also be used on airplanes or in high-security areas, to help find intruders or other that do not belong in the area.

In a further alternate embodiment of the present invention, processor 303 is effective in turning off the wireless device in response to the update zone. This embodiment is effective in areas mentioned above, such as hospitals, on airplanes, or in secure areas, and disables the phone, thereby preventing the phone from transmitting, which could lead to problems.

Processor 303 can also disable transmitter 307 in a wireless device located within an update zone. This would allow the user to receive incoming communications without being able to transmit. This would prevent the wireless device from transmitting any wireless signals, which can be the main problem with wireless devices in certain areas.

Processor 303 can also disable the wireless device or transmitter 307 selectively. For example, processor 303 can disable the wireless device or transmitter 307 for all calls other than emergency calls. This would allow 9-1-1 calls or the like to be performed, while disabling all other transmissions or call activity.

Memory 305 is effective in storing a first value of the option. By storing the first value, processor 303 can change the value back to the first value upon leaving the update zone. For example, if the wireless device is set to ring mode, it can be changed to vibrate mode while within the update zone. Upon leaving the update zone, the wireless device can be changed back to the first value, ringing mode, so that the wireless device is in the mode in which it was programmed.

Transmitter 307 is preferably coupled with receiver 301, and can be included as a single element transceiver. Transmitter 307 is effective in transmitting signals from the wireless device. In one embodiment of the present invention, transmitter 307 is turned off or disabled while the wireless device is located within the update zone. This disabling can be selective, for instance it may be disabled for all non-emergency calls while located within the update zone.

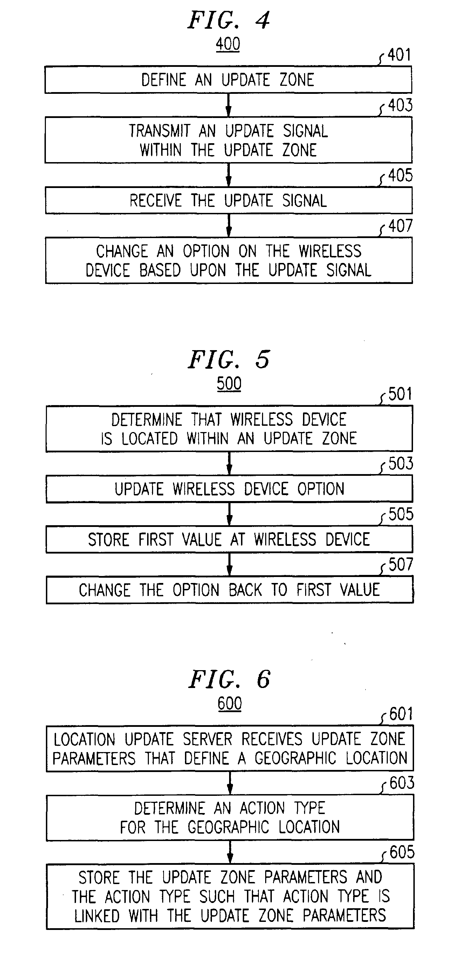

FIG. 4 depicts a flowchart 400 depicting a preferred method of changing an option on a wireless device based upon the geographic location of the wireless device in accordance with a preferred embodiment of the present invention. The processing depicted in FIG. 4 preferably occurs at update server 105, but can alternately be accomplished at any processing device located within communication system 100.

The update server defines (401) an update zone. The update zone comprises a geographic location.

An update signal is transmitted (403) within the update zone. In the preferred embodiment, the step of transmitting an update signal within the update zone comprises transmitting a cellular Global Positioning System (GPS) signal. In the alternate embodiment of the present invention, the step of transmitting an update signal within the update zone comprises transmitting a local Radio Frequency (RF) signal. In one embodiment of the present invention, the update signal is transmitted within the update zone at predetermined time intervals, such as during a predetermined time of day period.

As an example of the preferred embodiment, the update signal can be generated in an area in which a wireless device, such as a cellular telephone, is not desired to make noise. One example is in a movie theatre or opera house. Such ringing during a performance can be disruptive to other patrons, as well as to live performers in the performance. Signs may be posted instructing patrons to turn off their cellular phones prior to entering the theater. However, this does not ensure that the patrons will comply with the request. Utilizing the present invention, an update signal will be transmitted and cover the theater. In this manner, any patron entering the theater with a wireless device will receive this update signal. Upon receiving the update signal, the wireless device will switch from a ringing mode to a non-ringing mode, such as a vibrate mode. In this manner. even if a call is received by the user, the cell phone will not make an audible ringing sound.

This update signal can be sent only during show times, which would allow patrons to receive an audible indication that an incoming call is being received during times that a performance is not occurring.

A wireless device that is located within the update zone receives (405) the update signal.

An option is changed (407) on the wireless device based upon the update signal. In the preferred embodiment of the present invention, the option has a first value prior to entering the update zone. The wireless device preferably stores the first value at the wireless device prior to changing the option. The wireless device then changes the option on the wireless device back to the first value upon leaving the update zone or upon detecting that the wireless device is no longer receiving the update signal.

In the preferred embodiment of the present invention, the step of changing an option on the wireless device comprises changing the ring control of the wireless device. As used herein, the term "ring control" refers to any mechanism utilized by a wireless device to alert a user of the wireless device that action is requested to be taken. One common form of ring.control is for the wireless device to generate an audible signal. Another common form of ring control is for the wireless device to vibrate, thereby alerting a wearer of the wireless device that action is requested, such as answering an incoming phone call or reading an incoming email or paging message.

In the preferred embodiment, the ring control is changed from an audible mode to a vibrate mode upon detection of an update signal. In an alternate embodiment, the ring control is changed from a first audible mode to a second audible mode. One embodiment if to lower the volume of the ringer, thereby making a ring on the wireless device quieter.

A second embodiment is to increase the volume of the audible tone such that the second audible mode is louder than the first audible mode. This allows for detection of the wireless device in an area in which it does not belong, such as in a secure area or in a hospital. In this embodiment, the wireless device will increase the volume of its ringer. It will then ring the wireless device, either in response to a second signal received by the wireless device or automatically any time that the ring control is increased to a louder volume. This loud ringing of the wireless device can alert the proper personnel that a wireless device exists within the update zone.

In a further alternate embodiment of the present invention, the step of changing an option on the wireless device comprises disabling the wireless device. This embodiment can be particularly useful in a hospital or on an airplane, or in any other location where utilizing a wireless device can be detrimental. This disabling can be of the entire wireless device, or of portions of the wireless device, such as the transceiver, or the transmitter of the wireless device. It should be understood that a mechanism preferably exists within the wireless device to override this disabling in emergency situations. For example, if the user of a wireless device is in an area in which transmission is not desired, it will be disabled from transmitting. However, the wireless device preferably includes functionality to receive a request to place an emergency call, such as a 9-1-1- call. When a request for an emergency call is made, the wireless device preferably overrides the disabling of the transmitter and places the emergency call.

FIG. 5 depicts a flowchart 500 for a method for updating options on a wireless device based upon the location of the wireless device in accordance with a preferred embodiment of the present invention. The method depicted in FIG. 5 preferably is performed in a wireless device.

The wireless device determines (501) that the wireless device is located within an update zone. The update zone preferably comprises a geographic location. This step is preferably accomplished by receiving an update signal when the wireless device is located within the update zone. In the preferred embodiment, the step of determining that the wireless device is located within the update zone comprises receiving a cellular Global Positioning System (GPS) signal. In the alternate embodiment, the step of determining that the wireless device is located within the update zone comprises receiving a local Radio Frequency (RF) signal

The wireless device updates (503) an option on the wireless device while the wireless device is located within the update zone. The step of updating an option on the wireless device preferably comprises updating ring control of the wireless device. In the preferred embodiment, the ring control is changed from an audible mode to a vibrate mode. In an alternate embodiment, the ring control is changed from a first audible mode to a second audible mode, wherein the second audible mode is louder than the first audible mode. This allows the wireless device to be detected while in the update zone, particularly when a ring command is sent subsequent to the changing of the ring control.

In a further embodiment of the present invention, the step of updating an option on the wireless device comprises disabling the wireless device. The wireless device can be completely disables, or the transmitter can be disabled, thereby preventing the wireless device from transmitting.

The option has a first value prior to entering the update zone. In the preferred embodiment, the wireless device stores (505) the first value at the wireless device.

In the preferred embodiment of the present invention, the wireless device changes (507) the option on the mobile unit back to the first value upon leaving the update zone.

FIG. 6 depicts a flowchart 600 for a method for facilitating update zones at a location update server in accordance with a preferred embodiment of the present invention.

The location update server receives (601) update zone parameters that define a geographic location. The location update server preferably receives update zone parameters that define an update zone based upon an x-y coordinate system. Alternately, the update zone parameters can also comprise radius and center point parameters. The update zone parameters define the geographic boundaries of the update zone, such that a wireless device located within the update zone will receive the update signal.

The location update server determines (603) an action type for the geographic location. The action type can comprise a shut down action, changing to a vibrate mode from a ringing mode, or changing to a distinctive ringing action. The shut down action can either shut down the wireless device or the transmitter of the wireless device.

The location update server stores (605) the update zone parameters and the action type such that the action type is linked to the update zone parameters. The update zone parameters are preferably stored at the location update server. By linking the update zone parameters to the action type, the location update server can determine what the currently stored action type is for all update zones. The update action can be modified at different times. For example, a theater that desires to have wireless devices switch to vibrate mode during performances can set the action type to switch to vibrate during show times, but can turn it to no change or during times when a show is not on.

Thus, the present invention provides a method and apparatus that solves a problem associated with the prior art. The present invention provides a method and apparatus for changing an option on a wireless device based upon an update signal. The update signal can indicate that the option should be ring control that is changed from ring mode to vibrate mode, ring control that is changed from soft ringing to loud ringing, or transmit mode that is changed from enable to disabled.

The update signal can be transmitted within the update zone continuously, or during predetermined times of day. For example, the update signal can be transmitted within a theater only during show times, and allow wireless devices to return to their original options while shows are not currently being run.

While this invention has been described in terms of certain examples thereof, it is not intended that it be limited to the above description, but rather only to the extent set forth in the claims that follow.

## Claims

1. A method for changing an option on a wireless device based upon the geographic location of the wireless device, the method comprising the steps of:
defining an update zone, the update zone comprising a geographic location;
transmitting an update signal within the update zone;
receiving the update signal at a wireless device located within the update zone; and
changing an option on the wireless device based upon the update signal.

2. A method for changing an option on a wireless device in accordance with claim 1, wherein the option has a first value prior to entering the update zone, the method further comprising the step of storing the first value at the wireless device.

3. A method for changing an option on a wireless device in accordance with claim 2, further comprising the step of changing the option on the wireless device back to the first value upon leaving the update zone.

4. A method for changing an option on a wireless device in accordance with claim 1, wherein the step of transmitting an update signal within the update zone comprises transmitting a local Radio Frequency (RF) signal.

5. A method for changing an option on a wireless device in accordance with claim 1, wherein the step of transmitting an update signal within the update zone comprises transmitting a cellular Global Positioning System (GPS) signal.

6. A method for changing an option on a wireless device in accordance with claim 1, wherein the step of changing an option on the wireless device comprises changing ring control of the wireless device.

7. A method for changing an option on a wireless device in accordance with claim 6, wherein the step of changing ring control comprises changing ring control from an audible mode to a vibrate mode.

8. A method for changing an option on a wireless device in accordance with claim 6, wherein the step of changing ring control comprises changing ring control from a first audible mode to a second audible mode, wherein the second audible mode is louder than the first audible mode.

9. A method for changing an option on a wireless device in accordance with claim 1, wherein the step of changing an option on the wireless device comprises disabling the wireless device.

10. A method for changing an option on a wireless device in accordance with claim 1, wherein the step of transmitting the update signal within the update zone comprises transmitting the update signal within the update zone during a predetermined time of day period.

11. A method for updating options on a wireless device based upon the location of the wireless device, the method implemented by the wireless device comprising the steps of:
determining at the wireless device that the wireless device is located within an update zone, the update zone comprising a geographic location; and
updating an option on the wireless device while the wireless device is located within the update zone.

12. A method for updating options on a wireless device in accordance with claim 11, wherein the step of determining that the wireless device is located within the update zone comprises receiving an update signal when the wireless device is located within the update zone.

13. A method for updating options on a wireless device in accordance with claim 11, wherein the option has a first value prior to entering the update zone, the method further comprising the step of storing the first value at the wireless device.

14. A method for updating options on a wireless device in accordance with claim 13, further comprising the step of changing the option on the mobile unit back to the first value upon leaving the update zone.

15. A method for updating options on a wireless device in accordance with claim 11, wherein the step of determining that the wireless device is located within the update zone comprises receiving a local Radio Frequency (RF) signal.

16. A method for updating options on a wireless device in accordance with claim 11, wherein the step of determining that the wireless device is located within the update zone comprises receiving a cellular Global Positioning System (GPS) signal.

17. A method for updating options on a wireless device in accordance with claim 11, wherein the step of updating an option on the wireless device comprises updating ring control of the wireless device.

18. A method for updating options on a wireless device in accordance with claim 17, wherein the step of updating ring control comprises changing ring control from an audible mode to a vibrate mode.

19. A method for updating options on a wireless device in accordance with claim 17, wherein the step of updating ring control comprises changing ring control from a first audible mode to a second audible mode, wherein the second audible mode is louder than the first audible mode.

20. A method for updating options on a wireless device in accordance with claim 11, wherein the step of updating an option on the wireless device comprises disabling the wireless device.

21. A method for updating options on a wireless device in accordance with claim 11, wherein the wireless device includes a transmitter, the step of updating an option on the wireless device comprises disabling the transmitter.

22. A wireless device effective in having options of the wireless device updated based upon the location of the wireless device, the wireless device comprising:
a receiver effective in receiving a location signal, the location signal indicative of an update zone in which the wireless device is located; and
a processor effective in changing an option of the mobile unit based upon the update zone in which the wireless device is located.

23. A wireless device in accordance with claim 22, the wireless device further comprising memory effective in storing a first value of the option.

24. A wireless device in accordance with claim 23, wherein the processor is effective in changing the option back to the first value upon leaving the update zone.

25. A wireless device in accordance with claim 22, wherein the receiver is effective in receiving a local Radio Frequency (RF) signal.

26. A wireless device in accordance with claim 22, wherein the receiver is effective in receiving a cellular Global Positioning System (GPS) signal.

27. A wireless device in accordance with claim 22, wherein the processor is effective in changing the ring control of the wireless device in response to the update zone.

28. A wireless device in accordance with claim 27, wherein the ring control is changed from an audible mode to a vibrate mode.

29. A wireless device in accordance with claim 27, wherein the ring control is changed from a first audible mode to a second audible mode, wherein the second audible mode is louder than the first audible mode.

30. A wireless device in accordance with claim 22, wherein the processor is effective in turning off the wireless device in response to the update zone.

31. A wireless device in accordance with claim 22, wherein the wireless device includes a transmitter, wherein the processor is effective in turning off the transmitter in response to the update zone.

32. A method for facilitating update zones at a location update server, the method comprising:
receiving update zone parameters at the location update server, the update zone parameters defining a geographic location;
determining an action type for the geographic location; and
storing the update zone parameters and the action type such that the action type is linked to the update zone parameters.

33. A method for facilitating update zones in accordance with claim 32, wherein the step of receiving update zone parameters comprises receiving update parameters that define an update zone based upon an x-y coordinate system.

34. A method for facilitating update zones in accordance with claim 32, wherein the action type comprises a shut down action.

35. A method for facilitating update zones in accordance with claim 32, wherein the action type comprises changing to a vibrate mode.

36. A method for facilitating update zones in accordance with claim 32, wherein the action type comprises a distinctive ringing action.

37. A method for facilitating update zones in accordance with claim 32, wherein the update zone parameters are stored at the location update server.
